# EUROPÄISCHE PATENTSCHRIFT

(11) **EP 0 645 077 B1**
(45) Veröffentlichungstag und Bekanntmachung des Hinweises auf die Patenterteilung: **12.05.1999**
(21) Anmeldenummer: 94112084.2
(22) Anmeldetag: 03.08.1994
(51) Int. Cl.: A01D 90/08, A01B 73/00

(54) **Transportwagen für eine landwirtschaftliche Erntemaschine**
Agricultural harvester transport trolley
Chariot de transport pour machine de récolte agricole

(30) Priorität: 17.08.1993 DE 4327591; 17.08.1993 DE 4327593
(43) Veröffentlichungstag der Anmeldung: 29.03.1995
(60) Teilanmeldung: 98106552.7
(73) Patentinhaber: SAME DEUTZ-FAHR S.P.A., 24047 Treviglio (Bergamo) (IT)
(72) Erfinder: von Allwörden, Wilhelm, Dipl.-Ing., D-89168 Oberstotzingen (DE)
(74) Vertreter: Quinterno, Giuseppe

(56) Entgegenhaltungen:
- FR-A- 2 127 753
- US-A- 3 165 162
- US-A- 3 473 679
- US-A- 4 943 260
- US-A- 5 137 412

## Beschreibung

Die Erfindung betrifft eine landwirtschaftliche Erntemaschine gemäß dem Oberbegriff des Anspruchs 1.

Aus der Bauwirtschaft ist es bekannt, für Straßentransporte von Baufahrzeugen diese komplett auf einen Transportwagen zu laden, der dann von einer Zugmaschine (Lkw) zum Einsatzort gezogen wird. Weitere Aufgaben übernimmt der Transportwagen nicht.

Aus dem amerikanischen Patent US-3,473,679 ist ein Ladewagen bekannt, der umgebaut werden kann, um verschiedene Arten von Erntegutarten aufladen zu können. Dieser Ladewagen weist einen Greifarm auf, mit dem Erntegut von der Erntemaschine mittelbar auf den Ladewagen übergeben werden kann. Mit der Ausgestaltung des Ladewagens ist eine unmittelbare Aufnahme von Erntegut, das von der Erntemaschine über eine Abgabevorrichtung abgegeben wird, nicht möglich. Darüber hinaus ist dieser Ladewagen nicht dazu geeignet und auch nicht dazu ausgestaltet, eine abnehmbare Einrichtung der landwirtschaftlichen Erntemaschine sicher aufzunehmen.

Aus der nächstkommenden FR-A-2 127 753 ist ein Ladewagen bekannt, der zur Aufnahme von Erntegut ausgebildet ist. Mit diesem Ladewagen ist jedoch eine sichere Aufnahme einer Einrichtung der landwirtschaftlichen Erntemaschine nicht möglich.

Es ist daher Aufgabe der Erfindung, einen Ladewagen für zumindest eine Einrichtung einer landwirtschaftlichen Erntemaschine (oder gegebenenfalls für die gesamte Erntemaschine) bereitzustellen, der neben dem eigentlichen Transport der Einrichtung weitere Aufgaben beziehungsweise Funktionen übernimmt.

Diese Aufgabe wird erfindungsgemäß durch die Merkmale des Anspruchs 1 gelöst.

Durch die Verwendung einer Vorrichtung, die die Aufnahme von Ladegut gestattet, ist der Vorteil gegeben, daß der Transportwagen auf der Fahrt zum Ernteort und zurück die Einrichtung der Erntemaschine (bei Mähdreschern beispielsweise das abkoppelbare Schneidwerk) aufnimmt und während des Ernteeinsatzes das Ladegut (Erntegut) aufnimmt. Damit erübrigt sich die Bereitstellung eines weiteren Ladewagens. Der als Ladewagen für das Erntegut ausgebildete Transportwagen kann, wenn das Ladevolumen erschöpft ist, beispielsweise von der Erntemaschine abgekoppelt und an einen Traktor angekoppelt werden, der das Erntegut abfährt. Bei der Vorrichtung zur Aufnahme von Ladegut handelt es sich beispielsweise um eine in Abhängigkeit von Form oder Art des Erntegutes ausgestaltete Ladefläche.

In der folgenden Beschreibung sowie in der Zeichnungsbeschreibung und den Figuren wird davon ausgegangen, daß die Erntemaschine eine landwirtschaftliche Großballenpresse, insbesondere eine selbstfahrende Großballenpresse ist und das Ladegut aus Erntegut (beispielsweise Stroh oder Heu) besteht, aus dem Großballen, beispielsweise mit zylindrischem und insbesondere mit quadertörmigem Querschnitt, geformt sind. Hierbei handelt es sich um eine bevorzugte Ausführung der Erfindung, auf die der Erfindungsgedanke jedoch alleine nicht beschränkt ist.

In einer Weiterbildung der Erfindung ist die Vorrichtung zur Aufnahme von Ladegut eine Fördervorrichtung für das Ladegut im Bereich einer Ladefläche des Ladewagens. In diesem Fall ist der Ladewagen mit einer Fördervorrichtung ausgerüstet, die es gestattet, daß von der landwirtschaftlichen Emtemaschine abgegebene Erntegut von einem Bereich in dem das Ladegut aufgegeben wird, in einen rückwärtigen Bereich des Ladewagens zu befördern. Zu diesem Zweck ist es denkbar, daß das Ladegut aufgrund seiner Trägheit die Förderbewegung selbstätig durchführt oder die Fördervorrichtung antreibbar ist (beispielsweise mittels einer Zapfwellenverbindung zwischen der Erntemaschine und dem Ladewagen).

In Weiterbildung der Erfindung ist das Ladegut in zumindest einer Ebene (Ladefläche) auf dem Ladewagen aufladbar beziehungsweise stapelbar. Unter Verwendung entsprechend ausgebildeter Hebevorrichtungen oder Umlenkvorrichtung ist es denkbar, das Ladegut in mehreren Ebene auf der Ladefläche des Ladewagens zu stapeln. Dies hat den Vorteil, daß dadurch das Ladevolumen deutlich vergrößert wird. Im Falle von quaderförmigen Großballen besteht außerdem die Möglichkeit, die Vorrichtung zur Aufnahme von Ladegut (Ladefläche) und/oder auch die Fördervorrichtung für das Ladegut derart auszugestalten, daß nach Aufnahme des Großballens, während der die Längsachse des Großballens parallel zur Längsachse des Ladewagens ausgerichtet ist, so zu drehen, daß dann die Längsachse des Großballens quer zur Längsachse des Ladewagens gerichtet ist. Auch damit ist eine Erhöhung des Ladevolumens verbunden.

In Weiterbildung der Erfindung weist die Fördervorrichtung in Querrichtung der Längsachse des Ladewagens angeordnete Rollen auf, die sich über eine wesentlichen Teil der Ladefläche des Ladewagens erstrecken. Dies hat den Vorteil, daß das auf die Ladefläche aufgegebene Erntegut selbstätig von dem Aufgabenbereich in einen rückwärtigen Bereich des Ladewagens leiten kann. Zur Unterstützung dieser selbstätigen Bewegung ist es vorgesehen, daß zumindest ein Teil der Rollen antreibbar ist. Hier bietet beispielsweise Antrieb der in dem rückwärtigen Bereich des Ladewagens angeordneten Rollen den Vorteil, daß diese einen Abladevorgang des Erntegutes unter stützen.

In einer alternativen Ausgestaltung der Erfindung ist die Fördervorrichtung ein Kratzboden, der nach Annahme des Ladegutes diskontinuierlich antreibbar und zur Abgabe des Ladegutes ebenfalls antreibbar ist. So ist es beispielsweise denkbar, daß für den Fall, daß ein von der Großballenpresse abgegebener Großballen in einen Annahmebereich der Ladefläche kommt, der Kratzboden angetrieben wird, bis der Großballen vollständig auf der Ladefläche aufliegt. Dazu können ergänzend Einrichtungen (beispielsweise Sensoren) vorgesehen werden, die die Annahme des Großballens beziehungsweise den Antrieb der Kratzbodens erst dann gestatten, wenn die Längsachse der Erntemaschine mit der Längsachse des Ladewagens im wesentlichen übereinstimmt. Der Kratzboden ist zur Abgabe des Ladegutes ebenfalls antreibbar (insbesondere manuell), so daß damit der Abladevorgang unterstützt wird.

In Weiterbildung der Erfindung sind im Bereich der Vorrichtung zur Aufnahme des Ladegutes (Ladefläche) zumindest teilweise seitlich des Ladewagens Führungseinrichtungen angeordnet. Diese Führungseinrichtungen (beispielsweise Leitbleche, Leitschienen) haben den Vorteil, daß ein schräg aufgenommener Großballen in die korrekte Lage gebracht wird. Zu diesem Zweck sind die Führungseinrichtungen wenigstens im Annahmebereich des Großballens trichterförmig ausgebildet. Diese Führungseinrichtungen können für den Fall, daß der Großballen um seine Längsachse gedreht wird, heruntergeklappt werden (zum Beispiel abschnittsweise).

Eine Weiterbildng sieht vor, daß der Ladewagen zur Aufnahme des von der Erntemaschine aufgenommenen und verarbeiteten Erntegutes in einer Position hinter der Erntemaschine mit dieser verbunden ist, und daß zwischen einer Abgabevorrichtung der Erntemaschine und dem Ladewagen eine Übergabevorrichtung angeordnet ist, die das Erntegut zumindest unabhängig von der Fahrtrichtung der Erntemaschine auf den Ladewagen leitet. Die Anordnung einer Übergabevorrichtung, wobei diese mit der Erntemaschine bzw. dem Ladewagen verbunden ist und mit dem Ladewagen bzw. der Erntemaschine verbindbar ist, die das Erntegut zumindest unabhängig von der Fahrtrichtung der Erntemaschine auf den Ladewagen leitet, hat den Vorteil, daß das Erntegut jederzeit von der Erntemaschine an den Ladewagen abgebbar ist. Somit erfolgt die Überleitung sowohl bei Geradeausfahrt der Erntemaschine mit dem angehängten Ladewagen als auch bei Kurvenfahrt. Darüber hinaus hat die Anordnung der Übergabevorrichtung den Vorteil, daß eine Überleitung des Erntegutes auch in Abhängigkeit des Verarbeitungszustandes des Erntegutes erfolgen kann.

In Weiterbildung der Erfindung weist die Übergabevorrichtung zumindest eine dreh- und höhenverschwenkbare Ablagevorrichtung auf. Eine Drehverschwenkung hat den Vorteil, daß damit ein Richtungsversatz zwischen der Erntemaschine und dem Ladewagen ausgleichbar ist. Ergänzend dazu ist die Höhenverschwenkbarkeit der Ablagevorrichtung von Vorteil, um bspw. Unebenheiten des Bodens, die zu einem Höhenunterschied zwischen der Abgabevorrichtung der Erntemaschine und des Ladewagens führen, auszugleichen. Darüber hinaus ist es denkbar, daß die höhenverschwenkbare Ablagevorrichtung eine Ablage des Erntegutes in mehreren Ebenen auf dem Ladewagen ermöglicht.

In Weiterbildung der Erfindung ist der Ablagevorrichtung der Erntemaschine ein zumindest drehbar an den Ladewagen angeordnete Fangvorrichtung, die kraftbeaufschlagt in Richtung der Längsachse der Erntemaschine bewegbar ist, zugeordnet. In einer alternativen Ausgestaltung weist der Ladewagen eine Führungseinrichtung auf, die ein Führungselement der Ablagevorrichtung aufnimmt und diese Ablagevorrichtung in Abhängigkeit des Verarbeitungszustandes des Erntegutes und/oder der Fahrtrichtung der Emtemaschine führt. Diese beiden Ausgestaltungen der Übergabevorrichtung hat den Vorteil, daß das Überleiten des Erntegutes sowohl während der Geradeausfahrt als auch während der Kurvenfahrt der Erntemaschine erfolgt. Die Funktionsweise der Fangvorrichtung bzw. der Führungsvorrichtung ist anhand der Figuren näher beschrieben.

In Weiterbildung der Erfindung ist der Fangvorrichtung bzw. der Führungsvorrichtung eine Rückstellvorrichtung zugeordnet, die die Fangvorrichtung bzw. die Führungsvorrichtung in eine Position im wesentlichen in Längsrichtung des Ladewagens bringt. Auch die Funktionsweise der Rückstellvorrichtung ist anhand der Figuren gezeigt und näher beschrieben.

Weiterhin ist es erfindungsgemäß vorgesehen, daß der Ladewagen ein anhängbarer Transportwagen für zumindest eine Einrichtung der landwirtschaftlichen Erntemaschine, wobei die Einrichtung auf den Transportwagen aufladbar ist, ist und zumindest eine Vorrichtung zur Aufnahme von Erntegut, das von der Erntemaschine abgebbar ist, aufweist.

In einer Weiterbildung der Erfindung ist die Vorrichtung zur Aufnahme von Ladegut eine Fördervorrichtung für das Ladegut im Bereich einer Ladefläche des Ladewagens. In diesem Fall ist der Ladewagen mit einer Fördervorrichtung ausgerüstet, die es gestattet, daß von der landwirtschaftlichen Emtemaschine abgegebene Erntegut von einem Bereich in dem das Ladegut aufgegeben wird, in einen rückwärtigen Bereich des Ladewagens zu befördern. Zu diesem Zweck ist es denkbar, daß das Ladegut aufgrund seiner Trägheit die Förderbewegung selbstätig durchführt oder die Fördervorrichtung antreibbar ist (beispielsweise mittels einer Zapfwellenverbindung zwischen der Erntemaschine und dem Ladewagen).

Weitere Merkmale, Vorteile und Einzelheiten der Erfindung ergeben sich aus der Zeichnung sowie aus der nachfolgenden Beschreibung. In der Zeichnung zeigen:
- Figur 1:: einen Ladewagen in der Seitenansicht;
- Figur 2:: einen Ladewagen in der Draufsicht;
- Figur 3:: einen doppelstöckig ausgebildeten Ladewagen in Seitenansicht; und
- Figur 4:: einen Ladewagen in der Draufsicht/Seitenansicht.

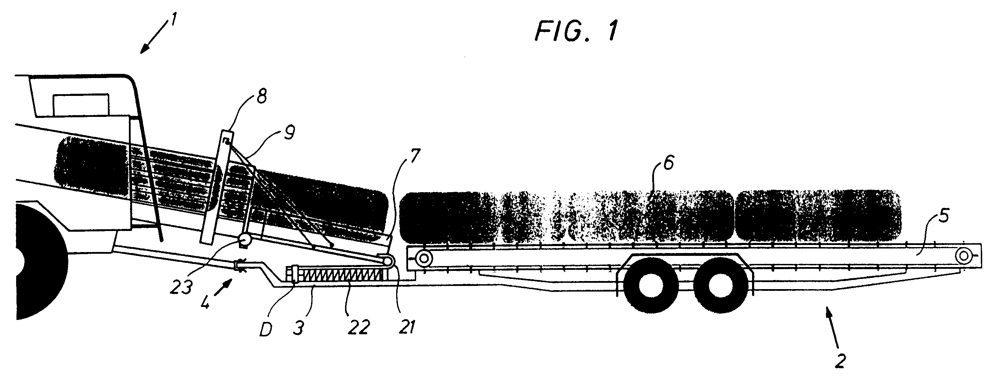

Figur 1 zeigt einen Ladewagen in der Seitenansicht. An einer landwirtschaftlichen Erntemaschine 1, deren rückwärtiges Ende gezeigt ist, ist ein Ladewagen 2 über dessen Deichsel 3 an einer Kupplung 4 angehangen. Dieser Ladewagen 2 dient einerseits dem Transport einer Einrichtung der landwirtschaftlichen Erntemaschine 1, bei der es sich beispielsweise um einen Mähdrescher (Einrichtung: Schneidwerk) oder auch um eine selbstfahrende Großballenpresse (Einrichtung: Pick-Up) handeln kann, zum Ernteort oder von diesem weg. Neben Aufnahme- beziehungsweise Befestigungselementen für die abnehmbare Einrichtung der Erntemaschine 1 (diese Elemente sind in den Figuren nicht gezeigt), weist der Ladewagen 2 einen Kratzboden 5 auf, der - wie in Figur 1 gezeigt - quaderförmige Großballen 6 aufnimmt. Dieser Kratzboden 5 ist beispielsweise jedesmal dann antreibbar, wenn ein Großballen 6 über eine der Erntemaschine 1 zugeordnete Ablagevorrichtung 7 (Ladeschurre) auf dem Kratzboden 5 abgelegt wird. Der Antrieb des Kratzbodens 5 erfolgt so lange, beziehungsweise über eine solche Strecke, die im wesentlichen einer Länge des Großballens 6 entspricht. In Figur ist darüber hinaus gezeigt, daß die Ablagevorrichtung 7 mit einem Pfosten 8 verbunden ist, wobei dies unter Zwischenschaltung zumindest einer Kette 9 erfolgt. Der Deichsel 3 ist eine Fangvorrichtung 21 zugeordnet, die eine als Feder 22 ausgebildete Rückstellvorrichtung aufweist. Die Fangvorrichtung 21 ist über einen Drehpunkt D zumindest drehbar an der Deichsel 3 gelagert, so daß die von der Fangvorrichtung 21 aufgenommene Ablagevorrichtung 7 um den Drehpunkt 23 verschwenkbar ist.

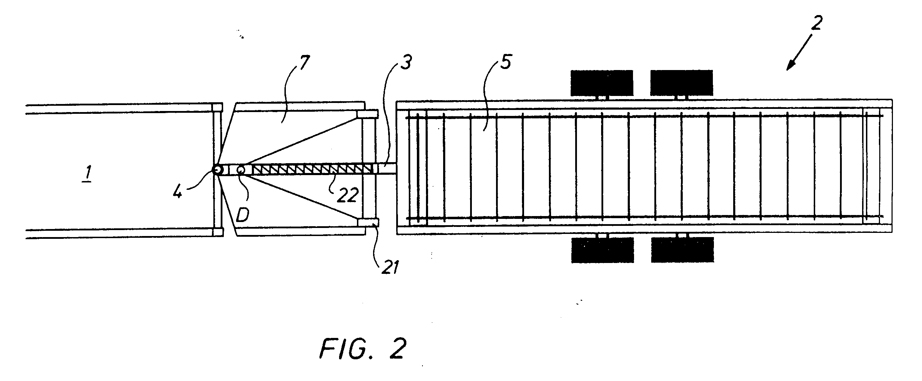

Figur 2 zeigt den erfindungsgemäß ausgebildeten Ladewagen in einer Draufsicht. Neben den in Figur 1 gezeigten und mit den gleichen Bezugsziffern versehenen Komponenten ist der Deichsel 3 die Fangvorrichtung 21 zugeordnet, die die als Feder 22 ausgebildete Rückstellvorrichtung aufweist. Die Fangvorrichtung 21 ist über den Drehpunkt 23 zumindest drehbar gelagert, so daß die von der Fangvorrichtung 21 aufgenommene Ablagevorrichtung 7 um den Drehpunkt 23 verschwenkbar ist.

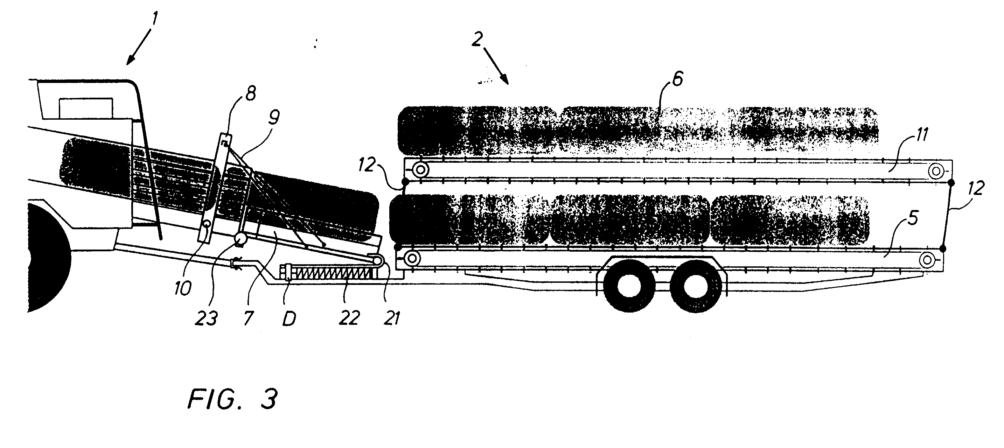

Figur 3 zeigt einen doppelstöckig ausgebildeten Ladewagen in der Seitenansicht. Neben den in den vorangegangen Figuren gezeigten und mit den gleichen Bezugsziffern versehenen Komponenten ist in Figur 3 ein weiterer Kratzboden 11 gezeigt, der über Verbindungselemente 12 (beispielsweise Hebelarme) in einer Ebene oberhalb und parallel zu dem Kratzboden 5 angeordnet ist. Über diese Verbindungselemente 12 ist der Kratzboden 11 verschwenkbar, so daß nach Auffüllung der Ladefläche in der unteren Ebene die Ablagevorrichtung 7 hochgeschwenkt, so daß der obere Kratzboden 11 mit Großballen 6 beladbar ist. Zum Verschwenken der Ablagevorrichtung 7 ist der Pfosten 8 um einen Drehpunkt 10 gelagert, wobei der Pfosten 8 elektromotorisch, hydraulisch oder auch manuell in eine Position verschwenkbar ist, die es gestattet, den Kratzboden 11 über die Ablagevorrichtung 7 mit Großballen 6 zu beladen.

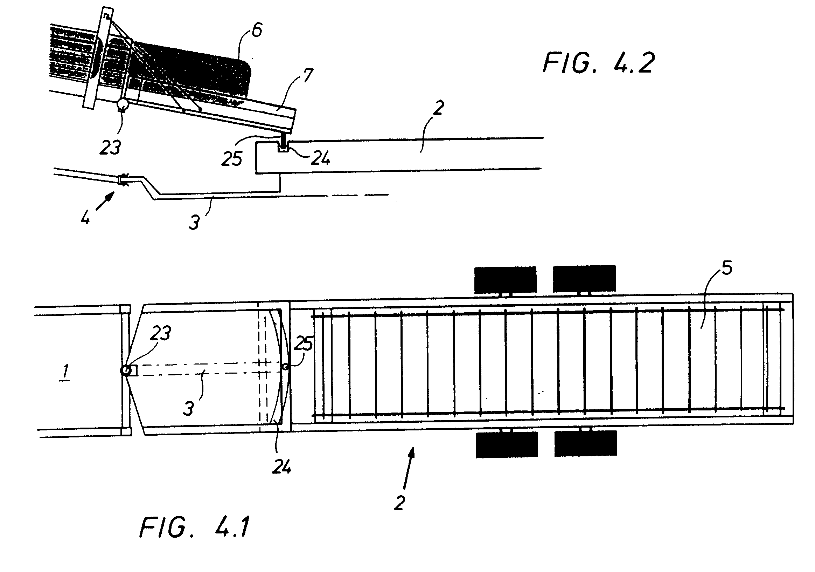

Figur 4 zeigt eine alternative Ausgestaltung der Übergabevorrichtung, wobei diese in Figur 4.1 der Draufsicht und in Figur 4.2 in der Seitenansicht dargestellt ist. Wie diesen Figuren zu entnehmen ist, weist der Ladewagen eine Führungsvorrichtung 24 auf, die halbkreisförmig bspw. U-profilförmig ausgebildet ist. Diese Führungsvorrichtung 24 ist in einem Bereich des Ladewagens 2 angeordnet, der der Erntemaschine 1 zugeordnet ist. In diese Führungsvorrichtung 24 greift - nach dem Anhängen des Ladewagens 2 an die Erntemaschine 1 - ein Führungselement 25 (bspw. Zapfen) ein, nachdem die Ablagevorrichtung während des Anhängevorganges angehoben und danach abgesenkt worden ist. Aufgrund der Zuordnung einer Rückstellvorrichtung (in Figur 4 einer besseren Übersicht wegen nicht dargestellt) erfolgt die Überleitung des Großballens 6 unabhängig von der Fahrtrichtung der Emtemaschine 1 auf den Ladewagen 2.

Das Verfahren zum Betreiben einer landwirtschaftlichen Erntemaschine, die ein aufgenommenes und verarbeitetes Erntegut über eine Abgabevorrichtung abgibt, sieht vor, daß ein Ladewagen zur Aufnahme des Erntegutes in einer Position hinter der Emtemaschine mit dieser verbunden ist, und daß das Erntegut über eine zwischen der Abgabevorrichtung der Erntemaschine und dem Ladewagen angeordnete Übergabevorrichtung zumindest unabhängig von der Fahrtrichtung der Emtemaschine auf den Ladewagen geleitet wird. Dieses Verfahren hat den Vorteil, wenn die landwirtschaftliche Erntemaschine eine selbstfahrende Großballenpresse und das Erntegut insbesondere quaderförmige Großballen sind, daß immer dann, wenn ein Großballen fertig hergestellt (gebunden) ist, dieser auf dem Ladewagen - unabhängig von der Fahrtrichtung der Emtemaschine - ablegbar ist. Damit kann der Großballen sowohl bei Geradeausfahrt als auch bei Kurvenfahrt der Erntemaschine abgegeben werden.

Bezugnehmend auf die Figuren 1 und 2 ist die Ablagevorrichtung 7 Bestandteil der Übergabevorrichtung. Die Ablagevorrichtung 7 wird - wie in Figur 2 gezeigt - durch die Feder 22 in ihrer Neutralposition, d. h. in Richtung einer Längsachse des Transportwagens 2 gezogen. Bei Geradeausfahrt der Emtemaschine erfolgt dann die Überleitung des fertig gepreßten Großballens 6 über die Abgabevorrichtung der Erntemaschine 1, weiter über die Ablagevorrichtung 7 auf den Kratzboden 5 des Transportwagens 2. Befindet sich die Erntemaschine 1 auf Kurvenfahrt und hat ein Großballen 6 noch nicht seinen fertigen Zustand erreicht, liegt dieser auf der Ablagevorrichtung 7, die, wie den Figuren zu entnehmen ist, mit seitlichen Führungselementen versehen ist, wodurch der Großballen 6 die Ablagevorrichtung 7 in Richtung der Längsachse der Erntemaschine 1 hält. Sobald ein nachfolgender Großballen den fertiggestellten Großballen komplett auf die Ablagevorrichtung 7 befördert, wird diese aufgrund der Federkraft der Feder 22 in Richtung der Längsachse des Transportwagens 2 gezogen, so daß der fertige Großballen von dem Kratzboden 5 erfaßbar und auf den Transportwagen 2 beförderbar ist. Ein vorteilhafter weiterer Verfahrensschritt besteht darin, daß die Überleitung des fertig gestellten Großballens erst dann erfolgt, wenn sich die Übergabevorrichtung bzw. die Ablagevorrichtung und der Ladewagen im wesentlichen auf einer gemeinsamen Längsachse befindet. So ist es bspw. denkbar, Sensoren einzusetzen, mit denen die Übereinstimmung der Längsachse der Ablagevorrichtung 7 und der Längsachse des Transportwagens 2 festgestellt wird, und die Überleitung erst dann erfolgt, wenn sich diese auf einer gemeinsamen Längsachse befinden. Dies kann bspw. dergestalt erfolgen, daß der Antrieb des Kratzbodens 5 erst bei Übereinstimmung der Längsachsen betätigt wird.

Weiterhin ist es denkbar, daß die Übergabevorrichtung bzw. die Ablagevorrichtung in Abhängigkeit des Verarbeitungszustandes des Erntegutes im wesentlichen in eine Position auf der Längsachse des Transportwagens gebracht wird. Hierbei ist es denkbar, daß im Falle der Fertigstellung des Großballens, die mittels geeigneter Sensoren festgestellt wird, und wenn der Großballen auf der Ablagevorrichtung 7 liegt, diese im wesentlichen in eine Position auf der Längsachse des Ladewagens gebracht wird. Dies kann bspw. mittels Hydraulikkraft geschehen, wobei an der Ablagevorrichtung 7 Hydraulikzylinder derart angreifen, die eine Verschwenkung in Richtung der Längsachse und auch aus der Längsachse heraus ermöglichen.

In einer weiteren Ausgestaltung der Erfindung ist der Ladewagen derart geneigt mit der Erntemaschine verbunden, daß sich das übergeleitete Erntegut aufgrund seiner Hangabtriebskraft in Richtung des rückwärtigen Endes des Ladewagens selbstätig bewegt. Insbesondere im Zusammenhang mit der Feststellung der Position der Ablagevorrichtung 7 hat dies den Vorteil, daß der Transportwagen keinerlei Fördervorrichtung benötigt, da sich die Großballen selbstätig bewegen. Zu diesem Zweck kann es vorgesehen werden, daß die Überleitung des Großballens von der Ablagevorrichtung auf den Transportwagen so lange verhindert wird, wie deren Längsachsen nicht übereinstimmen. Wird dann eine Übereinstimmung festgestellt, kann die Überleitung freigegeben werden. Ergänzend dazu ist es vorgesehen, daß der Aufnahme- bzw. Verarbeitungsvorgang in der Erntemaschine zumindest unterbrochen wird, wenn das Ladevolumens des Ladewagen zumindest annähernd erschöpft ist. Hierbei ist es bspw. denkbar, daß die auf den Transportwagen übergeleiteten Großballen gezählt werden und der Aufnahme bzw. Verarbeitungsvorgang in Abhängigkeit eines Grenzwertes unterbrochen bzw. gestoppt wird. Unter einer Unterbrechung ist ebenfalls zu verstehen, daß die Erntemaschine selbst mit einem Vorratsraum (insbesondere im Aufnamebereich) ausgerüstet ist, so daß der eigentliche Preßvorgang gestoppt, jedoch der Aufnahmevorgang ununterbrochen weiterlaufen kann. Ebenfalls ergänzend zu der Positonsfeststellung der Ablagevorrichtung 7 ist es denkbar, die seitlich an dem Transportwagen angeordneten Führungseinrichtungen derart verschwenkbar und kraftbeaufschlagt anzuordnen, daß diese einen schief auf den Transportwagen geleiteten Großballen diesen in die gewünschte Position bewegen.

## Patentansprüche

1. Landwirtschaftliche Erntemaschine (1) mit einem anhängbaren Ladewagen (2) zur Aufnahme von Erntegut (6) während des Ernteeinsatzes der Erntemaschine (1), wobei der Ladewagen (2) zumindest eine Vorrichtung zur Aufnahme des Ernteguts (6) aufweist, dadurch gekennzeichnet, dass der Ladewagen (2) ausserhalb des Ernteeinsatzes der Erntemaschine (1) als Transportwagen für wenigstens eine auf diesen aufladbare Einrichtung der Erntemaschine (1) ausgebildet ist, wobei die Einrichtung ein Teil der Erntemaschine (1) bildet und von der Erntemaschine (1) während des Ernteeinsatzes benötigt wird, und der Ladewagen (2) Befestigungselemente für die abnehmbare Einrichtung der Erntemaschine (1) aufweist.

2. Landwirtschaftliche Erntemaschine nach Anspruch 1, dadurch gekennzeichnet, daß die Vorrichtung zur Aufnahme von Erntegut (6) eine Fördervorrichtung für das Erntegut (6) im Bereich einer Ladefläche des Ladewagens (2) ist.

3. Landwirtschaftliche Erntemaschine nach Anspruch 1 oder 2, dadurch gekennzeichnet, daß das Erntegut in Zumindest einer Ebene, einer Ladefläche auf dem Ladewagen (2) aufladbar beziehungsweise stapelbar ist.

4. Landwirtschaftliche Erntemaschine nach einem der vorhergehenden Ansprüche, dadurch gekennzeichnet, daß die Fördervorrichtung in Querrichtung der Längsachse des Ladewagens (2) angeordnete Rollen aufweist, die sich über einen wesentlichen Teil der Ladefläche des Ladewagens (2) erstrecken.

5. Landwirtschaftliche Erntemaschine nach einem der vorhergehenden Ansprüche, dadurch gekennzeichnet, daß die Rollen zumindest teilweise antreibbar sind.

6. Landwirtschaftliche Erntemaschine nach einem der vorhergehenden Ansprüche, dadurch gekennzeichnet, daß die Fördervorrichtung ein Kratzboden (5) ist, der nach Annahme des Erntegutes (6) diskontinuierlich antreibbar und zur Abgabe des Erntegutes (6) ebenfalls antreibbar ist.

7. Landwirtschaftliche Erntemaschine nach einem der vorhergehenden Ansprüche, dadurch gekennzeichnet, daß die Erntemaschine (1) eine selbstfahrende Großballenpresse ist, daß die Einrichtung der Erntemaschine eine Aufnahmevorrichtung, z.B. ein Pick-up für das Erntegut (6) ist und das Erntegut (6), beispielsweise Stroh oder Heu, geformte Großballen mit insbesondere quaderförmigen Querschnitt sind.

8. Landwirtschaftliche Erntemaschine nach einem der vorhergehenden Ansprüche, dadurch gekennzeichnet, daß im Bereich der Vorrichtung zur Aufnahme des Erntegutes (6) zumindest teilweise seitlich des Ladewagens (2) Führungseinrichtungen (24) angeordnet sind.

9. Landwirtschaftliche Erntemaschine nach einem der vorhergehenden Ansprüche, dadurch gekennzeichnet, daß sie eine Abgabevorrichtung für aufgenommenes und verarbeitetes Erntegut (6) aufweist und mit dem Ladewagen (2) zur Aufnahme des Erntegutes (6) in einer Position hinter der Erntemaschine (1) verbunden ist, und zwischen der Abgabevorrichtung der Erntemaschine (1) und dem Ladewagen (2) eine Übergabevorrichtung angeordnet ist, die das Erntegut (6) zumindest unababhängig von der Fahrtrichtung auf den Ladewagen leitet.

10. Landwirtschaftliche Erntemaschine nach Anspruch 9, dadurch gekennzeichnet, daß die Übergabevorrichtung zumindest eine dreh- und höhenverschwenkbare Ablagevorrichtung (7) der Abgabevorrichtung der Erntemaschine (1) aufweist.

11. Landwirtschaftliche Emtemaschine nach Anspruch 10, dadurch gekennzeichnet, daß der Ablagevorrichtung (7) der Erntemaschine (1) eine zumindest drehbar an dem Lagewagen (2) angeordnete Fangvorrichtung (21) zugeordnet ist, die kraftbeaufschlagt in Richtung der Längsachse des Ladewagens (2) bewegbar ist.

12. Landwirtschaftliche Erntemaschine nach einem der vorhergehenden Ansprüche 10 oder 11, dadurch gekennzeichnet, daß der Ladewagen (2) eine Führungseinrichtung (24) aufweist, die ein Führungselement der Ablagevorrichtung (7) aufnimmt und diese Ablagevorrichtung (7) in Abhängigkeit des Verarbeitungszustandes des Großballens (6) und/oder der Fahrtrichtung der Erntemaschine (1) führt.

13. Landwirtschaftliche Erntemaschine nach einem der vorhergehenden Ansprüche 11 oder 12, dadurch gekennzeichnet, daß der Fangvorrichtung (21) beziehungsweise der Führungseinrichtung (24) eine Rückstellvorrichtung zugeordnet ist, die die Fangvorrichtung (21) beziehungsweise die Führungseinrichtung (24) in eine Position im wesentlichen in Längsrichtung des Ladewagens (2) bringt.

14. Landwirtschaftliche Erntemaschine nach einem der vorhergehenden Ansprüche, mit einer Abgabevorrichtung zum Abgeben des Erntegutes (6), wobei der Ladewagen (2) zur Aufnahme des Ernteguts (6) in einer Position hinter der Erntemaschine (1) dient, und zwischen der Erntemaschine (1) und der Ladefläche des Ladewagens (2) eine Übergabevorrichtung vorgesehen ist, die das Erntegut (6) unabhängig von der Fahrtrichtung der Erntemaschine (1) auf den Ladewagen (2) leitet, und die Übergabevorrichtung eine Ablagevorrichtung (7) für das Erntegut (6) aufweist, wobei die Ablagevorrichtung (7) schwenkbar gelagert ist und bei der Übergabe des Erntegutes (6) von der Erntemaschine (1) zur Übergabevorrichtung in Richtung der Längsachse der Erntemaschine (1) ausgerichtet ist und bei der Übergabe des Erntegutes (6) von der Übergabevorrichtung auf die Ladefläche des Ladewagens (2) kraftbeaufschlagt in Richtung der Längsachse des Ladewagens (2) bewegbar ist.

## Claims

1. An agricultural harvesting machine (1) with a trailable transport wagon (2) for the acceptance of harvested material (6), during the harvesting operation of the harvesting machine (1), whereby the transport wagon (2) has at least one arrangement for the acceptance of the harvested material (6), characterised in that the transport wagon (2) is constructed, apart from the harvesting operation of the harvesting machine (1), as a transport wagon for at least one component of the harvesting machine (1), which can be loaded onto it, whereby the component forms part of the harvesting machine (1) and is required by the harvesting machine (1) during the harvesting operation, and the transport wagon (2) has fastening elements for the detachable component of the harvesting machine (1).

2. An agricultural harvesting machine according to Claim 1, characterised in that the arrangement for the acceptance of harvested material (6) is a conveyor mechanism for the harvested material (6) in the region of a loading surface of the transport wagon (2).

3. An agricultural harvesting machine according to Claim 1 or Claim 2, characterised in that the harvested material can be loaded or stacked on at least one level of a loading surface onto the transport wagon (2).

4. An agricultural harvesting machine according to one of the preceding Claims, characterised in that the conveyor mechanism has rollers arranged crosswise to the longitudinal axis of the transport wagon (2), which extend over a substantial part of the loading surface of the transport wagon (2).

5. An agricultural harvesting machine according to one of the preceding Claims, characterised in that the rollers can at, least in part, be driven.

6. An agricultural harvesting machine according to one of the preceding Claims, characterised in that the conveyor mechanism is a scraper floor (5), which after acceptance of the harvested material (6) can be driven intermittently and can similarly be driven for the unloading of the harvested material (6).

7. An agricultural harvesting machine according to one of the preceding Claims, characterised in that the harvesting machine (1) is a self-propelled large baling press, that the component of the harvesting machine is a take-up device, e.g. a pick-up for the harvested material (6) and that the harvested material (6), for instance straw or hay, is in formed large bales with especially a rectangular cross section.

8. An agricultural harvesting machine according to one of the preceding Claims, characterised in that guide devices (24) are arranged in the region of the arrangement for the acceptance of the harvested material (6), at least in part to the sides of the transport wagon.

9. An agricultural harvesting machine according to one of the preceding Claims, characterised in that it has a delivery arrangement for taken up and processed harvested material (6) and is joined to the transport wagon (2) for the acceptance of the harvested material (6), in a position behind the harvesting machine (1), and a transfer mechanism is arranged between the delivery arrangement of the harvesting machine (1) and the transport wagon (2), which leads the harvested material (6) at least independently of the direction of travel onto the transport wagon.

10. An agricultural harvesting machine according to Claim 9, characterised in that the transfer mechanism has at least one depositing arrangement (7) which can be turned and tilted in height of the delivery arrangement of the harvesting machine (1).

11. An agricultural harvesting machine according to Claim 10, characterised in that the depositing arrangement (7) of the harvesting machine (1) is attached to a capturing device (21) arranged on the transport wagon (2) so that it can at least turn, which can be moved under power in the direction of the longitudinal axis of the transport wagon (2).

12. An agricultural harvesting machine according to one of the previous Claims 10 or 11, characterised in that the transport wagon (2) has a guide element (24), which takes up a guide arrangement of the depositing arrangement (7) and guides this depositing arrangement (7) in dependency on the processing status of the large bale (6) and/or the direction of travel of the harvesting machine (1).

13. An agricultural harvesting machine according to one of the previous Claims 11 or 12, characterised in that the capturing device (21) or the guide arrangement (24) is attached to a resetting device, which brings the capturing device (21) or the guide arrangement (24) into a position essentially in the longitudinal direction of the transport wagon (2).

14. An agricultural harvesting machine according to any one of the previous Claims, with a delivery arrangement for the delivery of the harvested material (6), whereby the transport wagon (2) serves to accept the harvested material (6) in a position behind the harvesting machine (1), and between the harvesting machine (1) and the loading surface of the transport wagon (2) a transfer mechanism is provided, which leads the harvested material (6) independently of the direction of travel of the harvesting machine (1) onto the transport wagon (2), and the transfer mechanism has a depositing arrangement (7) for the harvested material (6), whereby the depositing arrangement (7) is mounted so that it can pivot and is directed during the transfer of the harvested material (6) from the harvesting machine (1) into the transfer direction in the direction of the longitudinal axis of the harvesting machine (1) and can be moved under power into the direction of the longitudinal axis of the transport wagon (2) during the transfer of the harvested material (6) from the transfer mechanism onto the loading surface of the transport wagon (2).

## Revendications

1. Machine de récolte à usage agricole (1) comprenant un chariot de chargement (2) susceptible d'être remorqué pour recevoir le produit de récolte (6) pendant l'utilisation en récolte de la machine de récolte (1), le chariot de chargement (2) ayant au moins un dispositif pour recevoir le produit de récolte (6),
caractérisée en ce qu'
- en dehors de l'utilisation en récolte de la machine de récolte (1), le chariot de chargement (2) est utilisé comme chariot de transport pour recevoir au moins une installation de la machine de récolte (1) qui peut se charger sur le chariot,
- l'installation constituant une partie de la machine de récolte (1) et elle est nécessaire au fonctionnement de la machine de récolte (1) pour ses travaux, et le chariot de chargement (2) comporte des éléments de fixation pour l'installation amovible de la machine de récolte (1).

2. Machine de récolte agricole selon la revendication 1,
caractérisée en ce que
le dispositif pour recevoir le produit de récolte (6) est un dispositif de transfert pour le produit de récolte (6) dans la zone d'une surface de chargement du chariot de chargement (2).

3. Machine de récolte agricole selon la revendication 1 ou 2,
caractérisée en ce que le produit de récolte est empilable ou chargeable au moins dans un plan d'une surface de chargement sur le chariot de chargement.

4. Machine de récolte agricole selon l'une quelconque des revendications précédentes,
caractérisée en ce que
le dispositif de transfert comporte des galets dans la direction transversale de l'axe longitudinal du chariot de chargement (2), ces galets s'étendant sur une partie importante de la surface de chargement du chariot de chargement (2).

5. Machine de récolte agricole selon l'une quelconque des revendications précédentes,
caractérisée en ce que
les galets sont au moins en partie moteurs.

6. Machine de récolte agricole selon l'une quelconque des revendications précédentes,
caractérisée en ce que
le dispositif de transfert est un fond à griffes (5) qui est entraîné de façon discontinue après enlèvement du produit de récolte (6) et peut également être entraîné pour fournir le produit de récolte (6).

7. Machine de récolte agricole selon l'une quelconque des revendications précédentes,
caractérisée en ce que
la machine de récolte (1) est une presse à balles de grande dimension, automotrice,
l'installation de la machine de récolte est un dispositif récepteur ou ramasseur par exemple un pick-up d'une machine de récolte (6) et le produit récolté (6) est par exemple de la paille ou du foin mis en forme de grandes balles à section en particulier rectangulaire.

8. Machine de récolte agricole selon l'une quelconque des revendications précédentes,
caractérisée en ce que
dans la zone du dispositif pour recevoir le produit de récolte (6), il y a au moins partiellement latéralement du chariot de chargement (2), des installations de guidage (24).

9. Machine de récolte agricole selon l'une quelconque des revendications précédentes,
caractérisée en ce qu'
elle comporte un dispositif de sortie pour le produit de récolte (6) reçu et traité et avec lequel est relié le chariot de chargement (2) pour recevoir le produit de récolte (6), dans une position derrière la machine de récolte (1), et entre le dispositif de sortie de la machine de récolte (1) et le chariot de chargement (2), il y a un dispositif de transfert qui conduit le produit de récolte (6) au moins indépendamment de la direction de déplacement sur le chariot de chargement.

10. Machine de récolte agricole selon la revendication 9,
caractérisée en ce que
le dispositif de transfert comporte un dispositif de dépose (7) au moins susceptible de tourner et d'être pivoté en hauteur pour le dispositif de transfert de la machine de récolte (1).

11. Machine de récolte agricole selon la revendication 10,
caractérisée en ce que
le dispositif de dépose (7) de la machine de récolte (1) est un dispositif de prise (21) monté de manière au moins pivotante sur le chariot de chargement (2), ce dispositif étant déplacé en direction de l'axe longitudinal du chariot de chargement (2).

12. Machine de récolte agricole selon l'une des revendications 10 ou 11,
caractérisée en ce que
le chariot de chargement (2) comporte une installation de guidage (24) qui reçoit un élément de guidage du dispositif de dépose (7) et qui conduit ce dispositif de dépose (7) en fonction de l'état de traitement de la balle de grande dimension (6) et/ou de la direction de déplacement de la machine de récolte (1).

13. Machine de récolte agricole selon l'une quelconque des revendications 11 ou 12,
caractérisée en ce que
le dispositif d'accrochage (21) ou l'installation de guidage (24) se voit associer un dispositif de rappel qui met le dispositif d'accrochage (21) ou l'installation de guidage (24) dans une position essentiellement située dans la direction longitudinale du chariot de chargement (2).

14. Machine de récolte agricole selon l'une quelconque des revendications précédentes, comprenant un dispositif de dépose pour déposer le produit de récolte (6), le chariot de chargement (2) servant à recevoir le produit de récolte (6) dans une position en aval de la machine de récolte (1) et entre la machine de récolte (1) et la surface de chargement du chariot de chargement (2), il est prévu un dispositif de transfert qui conduit le produit de récolte (6) indépendamment de la direction de déplacement de la machine de récolte (1) sur le chariot de chargement (2) et le dispositif de transfert comporte un dispositif de dépose (7) pour le produit de récolte (6), le dispositif de dépose (7) étant monté pivotant et lors du transfert du produit de récolte (6) de la machine de récolte (1) vers le dispositif de transfert est aligné dans la direction de l'axe longitudinal de la machine de récolte (1) et lors du transfert du produit de récolte (6) du dispositif de transfert vers la surface de chargement du chariot de chargement (2) est deplaçable de manière assistée par une force dans la direction de l'axe longitudinal du chariot de chargement (2).
